**Europäisches Patentamt**

**European Patent Office**

**Office européen des brevets**

(19)

(11) Veröffentlichungsnummer : **0 095 634**
**B1**

(12) **EUROPÄISCHE PATENTSCHRIFT**

(45) Veröffentlichungstag der Patentschrift : 25.03.87

(21) Anmeldenummer : 83104780.8

(22) Anmeldetag : 14.05.83

(51) Int. Cl.⁴ : **B 65 G 57/24**

(54) Vorrichtung zum Palettieren von Stückgut.

(30) Priorität : 15.05.82 DE 3218372
05.06.82 DE 3221324

(43) Veröffentlichungstag der Anmeldung :
07.12.83 Patentblatt 83/49

(45) Bekanntmachung des Hinweises auf die Patenterteilung : 25.03.87 Patentblatt 87/13

(84) Benannte Vertragsstaaten :
BE FR GB IT NL

(56) Entgegenhaltungen :
DE-A- 2 601 309
DE-A- 2 907 328
DE-B- 2 033 828
FR-A- 2 396 708
US-A- 3 587 876
US-A- 4 022 334

(73) Patentinhaber : Bernhard Beumer Maschinenfabrik KG
Oelder Strasse 40
D-4720 Beckum (DE)

(72) Erfinder : Jendrzey, Wolfram
Zum Vele 9
D-4722 Ennigerl. Ostenfelde (DE)

(74) Vertreter : Hoormann, Walter, Dr.-Ing. et al
FORRESTER & BOEHMERT Widenmayerstrasse 4/I
D-8000 München 22 (DE)

## Beschreibung

Die Erfindung betrifft eine Vorrichtung zum Palettieren von mittels eines Zuförderers auf einer Förderspur hintereinander zugeführten Stückgutteilen, insbesondere gefüllten Säcken, mit einer Dreheinrichtung zum wahlweisen Drehen von Stückgutteilen um eine Vertikalachse ; einer der Dreheinrichtung vorgeordneten Aufteileinrichtung, mittels welcher die vom Zuförderer einzeln nacheinander zugeführten Stückgutteile gemäß einem vorgegebenen Lagen-Packmuster gesteuert auf wenigstens zwei nebeneinanderliegende Förderspuren aufzuteilen sind, wobei die Aufteileinrichtung zum einen eine mittig zur Dreheinrichtung angeordnete, zu einer Lagenbildungseinrichtung führende Längsfördereinrichtung mit einer zur Förderspur des Zuförderers fluchtenden ersten Förderspur und einer hierzu parallelen, seitlich versetzten zweiten Förderspur aufweist, mittels welcher die vom Zuförderer zugeführten Stückgutteile mit einer zu der Zufördergeschwindigkeit fluchtenden bzw. einer hierzu parallelen Fördergeschwindigkeit weiterzubewegen sind, und zum anderen eine im spitzen Winkel (α) zur Förderrichtung arbeitende Querfördereinrichtung aufweist, mittels welcher jeweils einem quer zur Förderrichtung auf eine andere Förderspur zu bewegenden Stückgutteil bis zum Erreichen der anderen, parallelen Förderspur eine quer zur Förderrichtung gerichtete Geschwindigkeitskomponente zu erteilen ist ; einer Lagenbildungseinrichtung mit einer Förderstrecke, an welcher eine Übergabe von dem in Förderrichtung hintenliegenden Abschnitt auf den in Förderrichtung vornliegenden Abschnitt der Förderstrecke gesteuert zu unterbinden ist, wobei der Lagenbildungseinrichtung eine Stapelbildungseinrichtung zum Übereinanderstapeln mehrerer Stückgutlagen nachgeordnet ist und am vorderen Endabschnitt der Förderstrecke der Lagenbildungseinrichtung eine Abschiebeeinrichtung angeordnet ist, mittels welcher jeweils eine auf der Lagenbildungseinrichtung gebildete Stückgutlage quer zur Förderrichtung auf eine Absetzeinrichtung abzuschieben ist, mittels welcher jeweils eine fertige Stückgutlage aus der Vorrichtung abzugeben ist.

Wenn vor- oder nachstehend von einem Palettieren von Stückgut die Rede ist, so ist hiermit insgesamt derjenige Vorgang gemeint, der letztlich zu einem aus mehreren übereinander angeordneten und zueinander ausgerichteten Lagen bestehenden Stückgutstapel führt, dessen einzelne Lagen jeweils nach einem vorgegebenen Packmuster (im allgemeinen in einem bestimmten Verband) gebildet sind, ohne daß der palettierte Stückgutstapel notwendigerweise auf einer Stapel- bzw. Ladepalette gebildet wird und/oder hierauf verbleibt. Vielmehr beinhaltet der Begriff des Palettierens hier auch eine palettenlose Stapelbildung, d. h. eine Stapelbildung ohne Verwendung einer Stapel- bzw. Ladepalette, wie weiter unten noch erläutert wird.

Derartige auch kurz als Palettierer bezeichnete Vorrichtungen zum Palettieren von gleichförmigem Stückgut, wie beispielsweise mit Zement gefüllten Säcken, Kartons o. dgl. sind in unterschiedlichster Ausgestaltung bekannt und erreichen heute bereits beim Palettieren von Säcken Arbeitsleistungen von mehr als 2 000 Säcken in der Stunde. Nun sind aber zwischenzeitlich Absackmaschinen, also Vorrichtungen zum Füllen leerer Säcke mit Zement o. dgl., entwickelt worden, die Ausstoßleistungen erzielen, welche mehr als doppelt so groß sind und bereits Leistungen von 4 000 Säcken/h überschritten haben. Für derartige Absackmaschinen müssen zur Ausnutzung ihrer Ausstoßleistung bisher zwei parallel zueinander arbeitende Palettierer eingesetzt werden. Derartige Anlagen erfordern mithin einen erheblichen Investitionsaufwand, beanspruchen einen entsprechend großen Raum, Wartungspersonal etc., wobei es selbstverständlich wünschenswert wäre, diesen Aufwand möglichst beachtlich zu reduzieren. Dieses ist jedoch bisher nicht gelungen, da man die Durchsatzleistung bekannter Palettierer nicht einfach durch entsprechende Erhöhung der Arbeitsgeschwindigkeit der einzelnen Bauteile vergrößern kann.

Aus der US-A-3 587 876 ist eine Vorrichtung der eingangs beschriebenen Gattung bekannt, bei welcher der Zuförderer zugleich Bestandteil der Längsfördereinrichtung der Aufteileinrichtung ist und an seinem in Förderrichtung vornliegenden Abschnitt deren eine Förderspur bildet, während die zweite Förderspur der Aufteileinrichtung von einem parallelen Bandförderer gebildet wird, auf welchen Stückgutteile ggf. mittels einer Querfördereinrichtung zu überführen sind. Dabei besteht die Querfördereinrichtung aus einem seitlich am Zuförderer ortsfest angelenkten Schwenkarm, der an seinem vorderen und rückwärtigem Ende jeweils eine Umlenkrolle mit vertikaler Achse aufweist, um welche ein endlos ausgebildeter, antreibbarer Gurt so umläuft, daß ein auf dem Zuförderer zugeführtes Stückgutteil mittels dieses Gurtes auf die zweite Förderspur der Aufteileinrichtung zu überführen ist, wenn sich der Schwenkarm der Querfördereinrichtung im spitzen Winkel zur Förderrichtung des Zuförderers über dessen Obertrum befindet. Der um eine vertikale Schwenkachse schwenkbare Schwenkarm der Querfördereinrichtung ist mittels einer Kolben-Zylinder-Einheit aus der vorstehend beschriebenen Überführungsstellung in eine Ruhestellung schwenkbar, in welcher er seitlich zum Zuförderer und parallel zu diesem angeordnet ist, wenn die Querfördereinrichtung unwirksam ist.

Es ist ersichtlich, daß bei einer derartig ausgebildeten Querfördereinrichtung nicht mit einer dichten Stückgut-Zuführfolge auf dem Zuförderer gearbeitet werden kann, bei welcher ein Stückgutteil unmittelbar auf das andere folgt, da es dabei beim Schwenken des Schwenkarms der Querfördereinrichtung aus dessen Ruhestellung in seine Arbeitsstellung zu einer Kollision des Schwenkarmes mit auf dem Zuförderer herangeförderten Stückgutteilen kommen würde. Auch behalten die mit der Querfördereinrichtung von der ersten Förderspur auf die zweite Förderspur überführten Stückgutteile bei der durch den Schwenkarm erfolgenden Ablenkung ihre Ursprungsgeschwindigkeit in Förderrichtung des Zuführförderers nicht bei. Nun ist aber eine dichte Stückgut-Zuführfolge und die Aufrechterhaltung der beim Zufördern vorhandenen Fördergeschwindigkeit in Förderrichtung u. a. eine Voraussetzung dafür, daß mit der Palettiervorrichtung eine entsprechend hohe Durchsatzleistung zu erzielen ist, da die Durchsatzleistung eines Palettierers von der Arbeitsstation mit der geringsten Durchsatz- bzw. Arbeitsgeschwindigkeit bestimmt wird und diese, wie bereits ausgeführt wurde, nicht beliebig zu erhöhen ist. Vielmehr muß bei der Erhöhung der Durchsatzleistung eines Palettierers dafür Sorge getragen werden, daß irgendwelche Totzeiten oder sonstige Verzögerungen des Arbeitsablaufes vermieden werden, damit die von den einzelnen Arbeitsstationen erreichbare Arbeitsleistung auch von der Gesamtvorrichtung tatsächlich zu erzielen ist.

Auch die aus der DE-GM 75 38 625 bekannte Vorrichtung weist bereits in der Aufteileinrichtung einen leistungsmäßigen Engpaß auf, da die Querfördereinrichtung dieser bekannten Palettiervorrichtung als Schwenkbahn ausgebildet ist, die bei einem Wechsel der Förderspur jeweils zur anderen Förderspur geschwenkt werden muß und demgemäß während eines Schwenkvorganges keine Stückgutteile abgeben kann.

Bei der aus der DE-A-26 01 309 bekannten Palettiervorrichtung werden die Stückgutteile beim Querverschieben mittels zweier zueinander paralleler Schwenkarme zwar gleichzeitig in Förderrichtung auf die nachgeordnete Drehvorrichtung weiterbewegt, doch werden dabei sämtliche Stückgutteile von einer mittigen Aufgabestelle her jeweils entweder nach links oder nach rechts quer verschoben, so daß auch hier keine dichte Stückgut-Zuführfolge mit einer entsprechend großen Durchsatzleistung möglich ist, da die Stückgutteile die Aufteileinrichtung dann nicht nur auf der linken oder rechten Förderspur, sondern auch dazwischen verlassen würden.

Der vorliegenden Erfindung liegt die Aufgabe zugrunde, die Vorrichtung der eingangs beschriebenen Gattung insbesondere bzgl. ihrer Arbeitskapazität durch Vermeidung von Totzeiten zu verbessern, so daß es bspw. möglich ist, fünftausend Säcke/h mit ihr zu palettieren, wobei zur Erreichung des angestrebten Ziels u. a. eine Beschickung mit dichter Stückgut-Zuführfolge möglich sein soll, und wobei die Vorrichtung dennoch so kompakt auszubilden sein soll, daß sie sich noch auf einem LKW transportieren läßt. Dabei soll die erfindungsgemäße Palettiervorrichtung trotz der hohen Durchsatzleistung betriebssicher und bzgl. des Stückgutes schonend arbeiten, und zwar wahlweise sowohl mit Paletten als auch palettenlos.

Als Lösung dieser Aufgabe ist erfindungsgemäß vorgesehen, daß die im spitzen Winkel ($\alpha$) zur Förderrichtung arbeitende, stationär angeordnete Querfördereinrichtung wenigstens einen sich in Förderrichtung erstreckenden, im selben Winkel ($\alpha$) zur Förderrichtung bewegten Mitnehmer aufweist, der intermittierend antreibbar von einer Steuereinrichtung so gesteuert ist, daß seine in Förderrichtung gerichtete Geschwindigkeitskomponente gleich der in Förderrichtung weisenden Fördergeschwindigkeit der Längsfördereinrichtung der Aufteileinrichtung ist.

Bei der erfindungsgemäßen Vorrichtung laufen mithin nicht nur diejenigen Stückgutteile von der Querfördereinrichtung unbeeinflußt frei durch die Aufteileinrichtung, die auf der ersten Förderspur verbleiben sollen, sondern auch die von der Querfördereinrichtung von der ersten auf die zweite Förderspur bewegten Stückgutteile durchlaufen die Aufteileinrichtung mit unverminderter Fördergeschwindigkeit in der Hauptförderrichtung zur Drehvorrichtung, wobei dennoch eine dichte Stückgut-Zuführfolge möglich ist, so daß an der Aufteileinrichtung keine unnötigen Totzeiten entstehen, welche sich mindernd auf die Durchsatzkapazität des Palettierers auswirken.

Der Mitnehmer der Querfördereinrichtung, der bevorzugt an einem in einer vertikalen Ebene um ein Umlenkmittel endlos umlaufenden Zugträger befestigt ist, kann in Ausgestaltung der vorliegenden Erfindung als sich im wesentlichen vertikal erstreckende Platte ausgebildet sein, die während des Betriebes der Querfördereinrichtung an einer Seitenfläche des betreffenden Stückgutteils in Anlage zu bringen ist, um das Stückgutteil bei Aufrechterhaltung seiner Geschwindigkeitskomponente in der Hauptförderrichtung auf eine andere Förderspur zu überführen, wobei bevorzugt eine gelenkige Befestigung des Mitnehmers an dem Zugträger vorgesehen ist, um die bei seiner Umlenkung entstehenden Relativbewegungen in zweckmäßiger Weise aufnehmen zu können. Bereits an dieser Stelle sei darauf hingewiesen, daß die Querfördereinrichtung mehrere Mitnehmer aufweisen kann, die dann zweckmäßigerweise jeweils mit gleichem gegenseitigen Abstand am Zugträger angeordnet sein können.

Da angestrebt wird, mit dem erfindungsgemäßen Palettierer Verbände mit allen möglichen in der Praxis gewünschten Packmustern schaffen zu können, also auch Packmuster, bei denen in einer quer zur Förderrichtung verlaufenden Stückgutreihe mehr als zwei Stückgutteile anzuordnen sind, muß für diesen Fall dafür Sorge getragen werden, daß die auf einer einzigen Förderspur herangeführten Stückgutteile ggf. nicht nur auf zwei Förderspuren, sondern beispielsweise auf drei Förderspuren aufgeteilt werden. Um im Hinblick auf das weiterhin angestrebte Ziel einer extrem hohen Arbeitsleistung hierfür die Aufteileinrichtung nicht intermittierend arbeiten zu lassen oder/und sonstige Maßnahmen treffen zu müssen, die sich zwangsläufig in einer Verminderung der Durchsatzleistung bemerkbar machen würden, ist demgemäß für solche Einsatzfälle bevorzugt vorgesehen, daß die Schaffung einer dritten Förderspur nicht in der Aufteileinrichtung, sondern in der Drehvorrichtung erfolgt, wofür eine an sich bekannte Drehvorrichtung mit Seitenwangen und Anschlägen zum wahlweisen Drehen der Stückgutteile vorgesehen sein kann, wobei dann wenigstens eine Seitenwange quer zur Förderrichtung begrenzt beweglich ist.

Die Förderstrecke der Lagenbildungseinrichtung ist bevorzugt aus zwei einander in Förderrichtung nachgeordneten Lagenbildungsförderern gebildet, zwischen denen eine gesteuert betätigbare Stückgutsperre angeordnet sein kann, mittels welche eine Übergabe von Stückgutteilen von dem ersten Lagenbildungsförderer auf den zweiten Lagenbildungsförderer gesteuert zu verhindern ist. Diese Stückgutsperre besteht bevorzugt aus wenigstens zwei quer zur Förderrichtung nebeneinander angeordneten Einheiten, die wahlweise gesteuert zu betätigen sind, um auf diese Weise zu ermöglichen, daß ein auf der einen Förderspur herangeführtes Stückgutteil im ersten Lagenbildungsförderer noch auch den zweiten Lagenbildungsförderer übergeben wird, während ein auf einer parallelen Förderspur herangeführtes Stückgutteil bereits zu sperren ist, da es zur Komplettierung der gerade gebildeten Stückgutlage nicht mehr benötigt wird und demgemäß Bestandteil der nächsten zu bildenden Stückgutlage wird. Auch diese Maßnahmen tragen ersichtlich dazu bei, zur Erzielung einer möglichst hohen Durchsatzleistung Totzeiten möglichst zu vermeiden.

Die Abschiebeeinrichtung weist bevorzugt ebenfalls Mitnehmer auf, die jeweils an einem Laufwagen sowie einem Paar endlos umlaufender, angetriebener Zugmittel befestigt sein können, wobei die Laufrollen der Laufwagen in zwei zueinander parallelen, jeweils in einer vertikalen Ebene angeordneten, endlosen Führungsschienen geführt sein können. Es hat sich als besonders zweckmäßig herausgestellt, wenn die Mitnehmer der Abschiebeeinrichtung jeweils an einer mit dem betreffenden Zugmittel (bspw. einer Kette) verbundenen Achse befestigt sind, die zur Achse einer Laufrolle fluchtet, und wenn die andere Laufrollenachse des anderen Laufrollenpaares von dem Zugmittel frei ist, da auf diese Weise eine besonders einfache Führungsbahn eingesetzt werden kann, die jeweils aus zwei parallelen Abschnitten besteht, welche an ihren Ende mit halbkreisförmigen Bogenabschnitten verbunden sind, so daß sich eine entsprechend einfache und demgemäß kostenmäßig günstige Fertigung ergibt.

Die Stapelbildungseinrichtung ist zweckmäßigerweise unterhalb der Absetzeinrichtung angeordnet, wobei zur Eliminierung von Totzeiten die plattenförmigen Stützmittel (also entweder eine Ladepalette oder bei palettenloser Palettierung eine andere Baueinheit) zum Abstützen der jeweils untersten Lage eines Stückgutstapels am oberen Ende der Stapelbildungseinrichtung einzuschleusen und jeweils an einem intermittierend absenkbaren Hubförderer zu halten sind.

Der Hubförderer der Stapelbildungseinrichtung weist bei einer bevorzugten Ausgestaltung der vorliegenden Erfindung zwei zueinander parallele Paare endlos umlaufender Kettenstränge auf, zwischen denen jeweils Stütztraversen zum horizontalen Abstützen der die Stückgutlagen abstützenden plattenförmigen Stützmittel vorhanden sind, wobei die Kettenstränge im Hubbereich senkrecht verlaufen und oberhalb sowie unterhalb des Hubbereichs jeweils mit Umlenkrädern (also bspw. Kettenrädern) horizontal umzulenken sind. Dabei können die abwärts laufenden Trume eines jeden links bzw. rechts angeordneten Kettenpaares zweckmäßigerweise einen Abstand aufweisen, der etwa gleich der Länge eines plattenförmigen Stützmittels ist, während die aufwärts laufenden Trume — schon zur Schaffung einer gedrängten Bauweise — in einer vertikalen Ebene verlaufen können.

Um auch an dieser Station Totzeiten zu minimalisieren, besitzt der Hubförderer der erfindungsgemäßen Vorrichtung bevorzugt mehrere jeweils mit gegenseitigem Abstand angeordnete Stütztraversen, so daß sich stets ein Paar einander zugeordneter Stütztraversen in Wartestellung befindet und sogleich nach dem Ausschleusen eines Stückgutstapels wiederum in Aufnahmestellung für ein plattenförmiges Stützmittel bewegt werden kann, um einen neuen Stapel zu bilden.

Wie bereits weiter oben erwähnt worden ist, können die plattenförmigen Stützmittel aus bekannten Stapel- bzw. Ladepaletten bestehen. Soll indes eine palettenlose Stapelung vorgenommen werden, so kann ein plattenförmiges Stützmittel bevorzugt aus einem Abschnitt einer Rollenbahn (aber bspw. auch aus einem Bandförderer) bestehen, wobei auch hier mit dem Ziel einer Vermeidung von Totzeiten bevorzugt zwei mit gegenseitigem Abschnitt angeordnete plattenförmige Stützmittel vorhanden sein können, von denen jeweils eines in Aufnahmeposition ist, während sich das andere in Abgabeposition befindet, bzw. sich ein Stützmittel in Warteposition befindet, wenn das andere Stützmittel zur Bildung eines Stückgutstapels im Hubförderer intermittierend abgesenkt wird.

Bevorzugte Ausgestaltungen der vorliegenden Erfindung sind in den Unteransprüchen beschrieben, wobei die angegebenen Merkmale sowohl einzeln als in Kombination von erfindungswesentlicher Bedeutung sein können.

Die Erfindung wird nachstehend an einem Ausführungsbeispiel unter Bezugnahme auf eine Zeichnung weiter erläutert. Es zeigt:

Figur 1 eine etwas schematisierte Seitenansicht eines erfindungsgemäßen Palettierers in Richtung des Pfeiles I in Fig. 2 gesehen;

Figur 2 eine Draufsicht auf den Palettierer gemäß Fig. 1 in Richtung des Pfeils II in Fig. 1 gesehen;

Figur 3 eine etwas schematisierte Seitenansicht der Querfördervorrichtung der Aufteileinrichtung in Richtung des Pfeiles V in Fig. 4 gesehen ;

Figur 4 eine Draufsicht auf die Darstellung gemäß Fig. 3 in Richtung des Pfeiles VI in Fig. 3 gesehen ;

Figur 5 eine gegenüber den Fig. 3 und 4 vergrößerte Schnittdarstellung durch die Querfördervorrichtung in Richtung der Schnittlinie VII-VII in Fig. 4 gesehen ;

Figur 6 eine etwas schematisierte Seitenansicht der zwischen dem zweiten Lagenbildungsförderer und der Absetzeinrichtung vorhandenen Abschiebeeinrichtung ;

Figur 7 eine vergrößerte Teildarstellung der Abschiebeeinrichtung gemäß Fig. 6, welche die Anlenkung eines Mitnehmers an eine als Zugmittel wirkende Kette sowie die Führung einer Laufrolle eines Laufrollenwagens in einer Führungsschiene zeigt ;

Figur 8 eine schematische Darstellung der Arbeitsweise des Palettierers gemäß den Fig. 1 bis 7 zwischen der Heranführung von Stückgutteilen und dem Absetzen auf den Hubförderer ;

Figur 9 eine Tabelle, aus welcher unterschiedliche Packmuster und die mit derartigen Packmustern erreichbaren maximalen Stundenleistungen entnehmbar sind ; und

Figur 10 eine graphische Darstellung der erzielbaren Stundenleistung in Abhängigkeit von dem gewählten Packmuster (Verband) und der Lagenzahl.

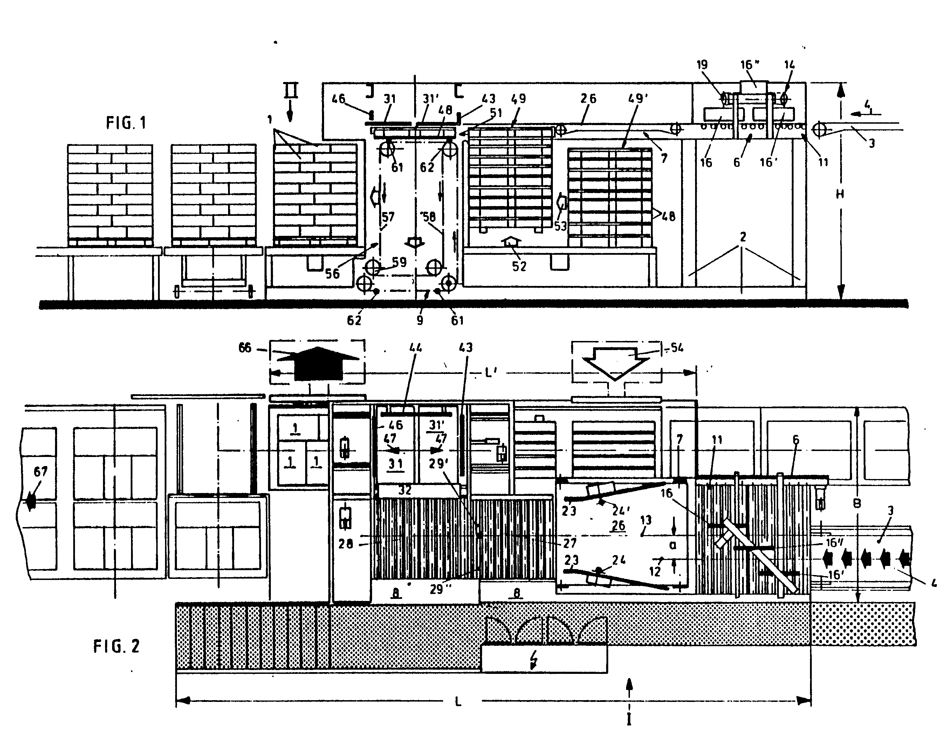

Die Fig. 1 und 2 zeigen in einer Seitenansicht bzw. einer Draufsicht eine erfindungsgemäße Vorrichtung zum Palettieren von mit Zement gefüllten Säcken 1 mit einer Stundenleistung von bis zu 5 000 Säcken/h, wobei erkennbar ist, daß es sich trotz dieser gewaltigen Leistung um eine sehr kompakte Anlage handelt, deren über alles gemessene Breite B nur 3 m, deren Höhe H nur knapp 3 m, und deren Gesamtlänge L nur etwa 9 m beträgt, wobei die Rumpflänge L' nur etwa 6 m ausmacht, so daß bei einer Ausgestaltung, bei welcher die seitlich der Rumpflänge L' liegenden Teile abschraubbar sind, ein Transport auf einem geeigneten LKW ohne weiteres durchführbar ist, da die Länge L' des Gerüstes 2 dort ohne weiteres unterzubringen ist.

Der Palettierer wird von einem als Bandförderer ausgebildeten Zuförderer 3 mit einer Zuführgeschwindigkeit von 0,83 m/s beschickt, wobei die Zementsäcke auf dem Zuförderer 3 in dichter Folge mit wenigen cm gegenseitigem Abstand angeordnet sind und dem Palettierer mithin mit dieser Geschwindigkeit gemäß den Pfeilen 4 zugeführt werden.

Der Palettierer besitzt eine im ganzen mit 6 bezeichnete Aufteileinrichtung, mittels welcher die ihm von dem Zuförderer 3 übergebenen Stückgutteile (Säcke) je nach dem vorgegebenen Packmuster wahlweise quer zur Förderrichtung gemäß den Pfeilen 4 zu bewegen sind, wie dieses weiter unten noch im einzelnen erläutert wird. Der Aufteileinrichtung 6 ist eine im ganzen mit 7 bezeichnete Drehvorrichtung nachgeordnet, mittels welcher die Stückgutteile gemäß dem vorgegebenen Packmuster wahlweise um 90° um eine Vertikalachse zu drehen sind. Auf die Drehvorrichtung 7 folgt sodann in Förderrichtung 4 eine im ganzen mit 8 bezeichnete Lagenbildungseinrichtung, der wiederum eine im ganzen mit 9 bezeichnete Stapelbildungseinrichtung zum Stapeln mehrerer Stückgutlagen übereinander nachgeordnet ist, die mit einer Abgabeeinrichtung zusammenarbeitet, mittels welcher jeweils ein fertiger Stückgutstapel aus dem Palettierer auszuschleusen ist.

Die Aufteileinrichtung 6 besitzt eine als angetriebene Rollenbahn ausgebildete Längsfördervorrichtung 11 mit quer zur Förderrichtung gemäß den Pfeilen 4 verlaufenden Rollen, die außermittig zum Zuförderer 3 angeordnet ist, d. h. die Mittellinie 12 des Zuförderers 3 ist zu der Mittellinie 13 der die Längsfördervorrichtung 11 bildenden Rollenbahn um ein Maß a versetzt, wobei die Mittellinie der Rollenbahn 11 aber zugleich auch Mittellinie der Drehvorrichtung 7 und der Lagenbildungseinrichtung 8 ist, wie weiter unten noch erläutert wird.

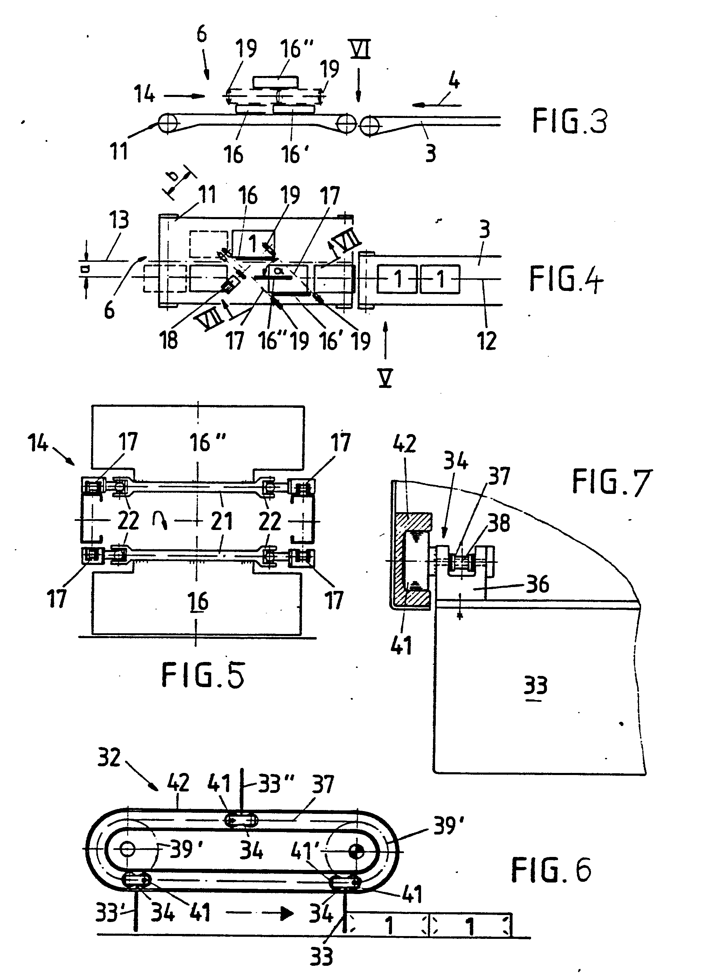

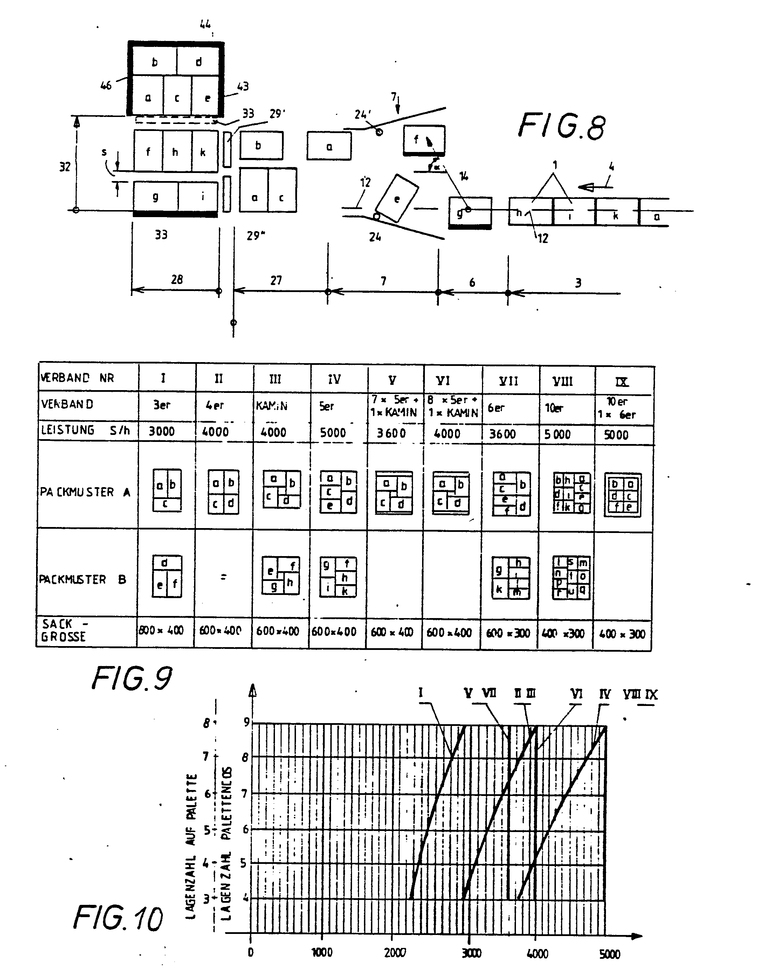

Oberhalb der die Längsfördervorrichtung 11 der Aufteileinrichtung 6 bildenden Rollenbahn ist eine ebenfalls zur Aufteileinrichtung 6 gehörende, im ganzen mit 14 bezeichnete Querfördervorrichtung angeordnet (s. auch Fig. 3 bis 5), mittels welcher jeweils einem quer zur Förderrichtung 4 zu bewegenden Sack 1 bis zum Erreichen der zu bildenden zweiten Förderbahn (s. a. Fig. 8) unter Aufrechterhaltung der ihm von der Rollenbahn 11 erteilten Fördergeschwindigkeit in Förderrichtung 4 eine quer zur Förderrichtung 4 gerichtete Geschwindigkeitskomponente zu erteilen ist, wie nachstehend unter Bezugnahme auf die Fig. 3 bis 5 zugleich mit einem Blick auf Fig. 8 erläutert ist, wobei in Fig. 3 und 4 die Längsfördervorrichtung der Aufteileinrichtung als Gurtförderer dargestellt ist.

Die oberhalb der Längsfördervorrichtung 11 angeordnete Querfördervorrichtung 14 der Aufteileinrichtung 6, die in einem spitzen Winkel α zur Förderrichtung 4 bzw. zu der durch die Mittellinie 12 des Zuförderers 3 bestimmten ersten Förderspur verläuft, besitzt drei plattenförmige Mitnehmer 16, die jeweils an zwei mit gegenseitigem Horizontalabstand b angeordneten, jeweils in einer vertikalen Ebene endlos umlaufenden Ketten 17 angeordnet sind, wobei der gegenseitige Abstand der Mitnehmer 16 gleich ist. Die Mitnehmer 16 erstrecken sich in Förderrichtung gemäß dem Pfeil 4 bzw. parallel hierzu und werden durch die von einem Antrieb 18 angetriebenen Ketten im Winkel α zur Förderrichtung gemäß dem Pfeil 4 bzw. zur der Mittellinie 12 und damit zu der ersten Förderspur bewegt, wobei die Ketten 17 um Kettenräder 19 umgelenkt werden. Während der in den Fig. 3 und 4 mit 16 bezeichnete Mitnehmer soeben einen Sack 1 auf die zweite Förderspur verbracht hat und demgemäß nunmehr anschließend bei erneuter Betätigung der Querfördervorrichtung 14 aus seiner nach unten gerichteten Stellung um die in Fig. 4 oben liegenden Kettenräder in eine sich nach oben erstreckende Ruhestellung' umgelenkt wird, befindet sich der in den Fig. 3 und 4 mit 16' bezeichnete Mitnehmer in Wartestellung und kann ohne Zeitverzögerung sogleich bei erneuter Betätigung der Querfördervorrichtung 4 eine unter dem Winkel α zur Mittellinie 12 verlaufende Geschwindigkeitskomponente erteilen. Der in den Fig. 3 und 4 mit 16″ bezeichnete dritte Mitnehmer befindet sich in der dargestellten Position mittig an der Oberseite und erstreckt sich senkrecht nach oben.

Wie aus Fig. 5 erkennbar ist, sind die Mitnehmer 16, 16' und 16″ jeweils an einer Kardanwelle 21 befestigt, die an ihren beiden Enden ein Kardangelenk 22 besitzt, so daß jede Kardanwelle 21 über zwei Kardangelenke 22 mit den Ketten 17 verbunden ist, um an den Umkenkstellen anderenfalls auftretenden Zwängen auszuweichen bzw. entsprechende Relativbewegungen aufnehmen zu können.

Der intermittierend betriebene Antrieb 18 ist von einer nicht dargestellten Steuereinrichtung gesteuert, die gemäß dem jeweils zu bildenden Packmuster programmiert ist.

Bei der der Aufteileinrichtung 6 in Förderrichtung nachgeordneten Drehvorrichtung 7, die im Gegensatz zu dem Zuförderer 3 ebenso wie die Lagenbildungseinrichtung 8 symmetrisch zu der Längsfördervorrichtung 11 der Aufteileinrichtung 6 angeordnet ist, handelt es sich um eine an sich bekannte Vorrichtung, die in Fig. 2 schematisch angedeutet und in Fig. 1 der besseren Übersicht halber fortgelassen worden ist.

Sie besitzt Seitenwangen 23 und 23', die sich in Förderrichtung gemäß den Pfeilen 4 etwas verengen und jeweils einen rohrförmigen oder aber auch ggf. anders ausgebildeten Anschlag 24 bzw. 24' aufweisen, der aus einer Betriebsstellung in eine Ruhestellung gesteuert hochschwenkbar ist. Läuft in der Betriebsstellung ein Sack 1 auf der betreffenden Förderspur gegen den heruntergeschwenkten Anschlag 24 bzw. 24', so wird er um 90° gedreht und wird sodann in dieser gedrehten Stellung von dem Bandförderer' 26 der Drehvorrichtung 7 an die sich anschließende Lagenbildungseinrichtung 8 übergeben. Ist der betreffende Anschlag 24 oder 24' aber hochgeschwenkt, so wird der betreffende Sack 1 nicht gedreht, sondern läuft in derjenigen Stellung, die er auf dem Zuförderer 3 hatte (hierbei handelt es sich im allgemeinen um die Längsstellung), durch die Drehvorrichtung 7 hindurch. Die Drehvorrichtung 7 unterscheidet sich von den bekannten Drehvorrichtungen für Palettierer dadurch, daß mit ihr eine dritte Förderspur von Stückgutteilen zu schaffen ist. Hierfür ist die Seitenwange 23 mit dem an ihr angeordneten Anschlag 24 aus der Fig. 2 dargestellten Stellung begrenzt in Richtung auf die Mittellinie 13 beweglich (die Verstellmittel sind nicht dargestellt).

Die der Drehvorrichtung 7 nachgeordnete Lagenbildungseinrichtung 8 besteht im wesentlichen aus zwei einander in Förderrichtung 4 nachgeordneten Lagenbildungsförderern 27 und 28, die jeweils als Rollenförderer ausgebildet sind, und einer zwischen diesen beiden Förderern 27, 28 angeordneten Stückgutsperre bzw. -bremse 29, mittels welcher eine Übergabe von Stückgut von dem Förderer 27 auf den Förderer 28 gesteuert zu verhindern ist. Dabei besteht die Stückgutsperre 29 aus zwei rechtwinklig zur Förderrichtung nebeneinander angeordneten Einheiten 29' und 29″, die unabhängig voneinander wahlweise zu betätigen sind, und zwar gesteuert gemäß dem jeweils zu bildenden Packmuster bzw. den jeweils gerade herrschenden Verhältnissen, wie weiter unten noch im einzelnen erläutert wird. Die Stückgutsperre 29 ist oberhalb der Förderer 27, 28 angeordnet, wobei ihre Bremsteile aus einer angehobenen Ruhestellung in eine abgesenkte Aktivstellung absenkbar sind.

Neben dem Kopf des in Förderrichtung vorn liegenden Lagenbildungsförderer 28 befindet sich eine einen zweiteiligen Absetztisch 31, 31' aufweisende Absetzeinrichtung. Zwischen dieser und dem Lagenbildungsförderer 28 ist in Fig. 2 eine im ganzen mit 32 bezeichnete Abschiebeeinrichtung schematisch angedeutet, deren wesentliche Einzelheiten aus den Fig. 6 und 7 erkennbar sind. Die Abschiebeeinrichtung 32 ist ähnlich wie die Querfördervorrichtung 14 der Aufteileinrichtung 6 als « Paddelförderer » ausgebildet und besitzt drei mit gleichem gegenseitigen Abstand angeordnete, plattenförmige Mitnehmer 33, 33' und 33″, mittels welcher sich jeweils eine auf dem Lagenbildungsförderer 28 vorhandene fertige Stückgutlage auf den Absetztisch 31, 31' abschieben läßt. Die Mitnehmer 33, 33', 33″ sind jeweils an einem Laufwagen 34 befestigt, wie insbesondere aus Fig. 7 erkennbar ist, und zwar an jeder Seite mit einem Ansatz 36, der jeweils durch einen Bolzen 38 mit einer Kette 37 verbunden ist, die auf jeder Seite endlos umläuft und an Kettenrädern 39, 39' umgelenkt ist, von denen das Kettenrad 39' mittels eines nicht dargestellten Antriebes angetrieben ist. Dieser Laufwagen besitzt zwei Laufrollen 41, 41', wobei der Bolzen 38 zu der Laufrollenachse der Laufrolle 41 fluchtet. Die Laufrollen 41' sind jeweils nicht mit der Kette 37 verbunden. Dieses ermöglicht eine geometrisch besonders einfache Führungsbahn 42, wie sie aus Fig. 6 erkennbar ist und als Paar mit gegenseitigem Abstand an jeder Seite der Mitnehmer 33, 33', 33″ vorhanden ist.

Aus Fig. 6 ist weiterhin erkennbar, daß ein Mitnehmer 33' jeweils in Wartestellung ist, wenn der ihm vorlaufende Mitnehmer 33 eine aus Säcken 1 bestehende Lage auf den Absetztisch 31, 31' abgeschoben hat, und daß sich der dritte Mitnehmer 33″ dann in Ruhestellung im Obertrum befindet, wobei dieser Mitnehmer 33″ in die Wartstellung nachrückt, wenn der Mitnehmer 33' tätig geworden ist u. s. f.

Der Absetztisch 31, 31' ist seitlich von einem Andrücker 43, einer Richtwange 44 und einer Gleitwange 46 begrenzt, wobei der jeweils tätig gewordene Mitnehmer 33 bzw. 33' bzw. 33″ zusammen mit den Elementen 43, 44 und 46 Kalibrierelemente bilden, mittels welcher die auf dem Absetztisch 31, 31' befindliche Lage allseitig zu kalibrieren ist, bevor sie abgesetzt wird. Zum Absetzen werden die beiden Absetztischhälften 31 und 31' gemäß den Pfeilen 47 in entgegengesetzter Richtung seitlich unter der Stückgutlage weggezogen, so daß die betreffende Lage sodann auf ein plattenförmiges Stützmittel oder aber auf eine bereits abgesetzte Stückgutlage abgesetzt werden kann, wie nachstehend noch im einzelnen erläutert ist.

Soll eine Palettierung auf Stapel bzw. Ladepaletten 48 erfolgen, wie dieses in den Fig. 1 und 2 dargestellt ist, so wird jeweils eine Palette 48 vom oberen Ende eines Palettenstapels 49 her in Richtung des Pfeiles 51 unter den Absetztisch 31, 31' geführt, so daß die sich auf den Absetztisch 31, 31' betreffende Stückgutlage nach dem Abziehen auf dieser Palette abgesetzt werden kann, die anschließend um die Höhe einer Sackdicke nach unten bewegt wird, wie weiter unten noch im einzelnen beschrieben ist. Danach rückt der Palettenstapel 49 gemäß dem Pfeil 52 mittels eines geeigneten Hubförderers um die Höhe einer Palette 48 nach oben, so daß sich anschließend sogleich wiederum eine Palette 48 in Wartestellung befindet. Ist der Palettenstapel 49 aufgebraucht, so rückt gemäß dem Pfeil 53 mittels einer geeigneten Vorrichtung ein neuer Palettenstapel 49' nach, welcher dem Palettierer gemäß dem Pfeil 54 zugefördert worden ist u. s. f.

Die im ganzen mit 9 bezeichnete Stapelbildungseinrichtung ist, wie bereits erwähnt, unterhalb des Absetztisches 31, 31' angeordnet und weist einen Hubförderer 56 auf, der auf jeder Seite ein Paar endlos umlaufender Ketten 57 und 58 besitzt, die über Kettenräder 59 so umgelenkt werden, daß die Kettenstränge im Hubbereich senkrecht verlaufen und oberhalb und unterhalb des Hubbereiches horizontal, wie aus der Fig. 1 erkennbar ist. Zwischen den mit Abstand zueinander angeordneten, zueinander parallelen äußeren Ketten 57, von denen in Fig. 1 nur die vornliegende Kette zu sehen ist, und den in gleicher Weise relativ zueinander angeordneten inneren Ketten 58, von denen in Fig. 1 ebenfalls nur die vornliegende Kette zu sehen ist, sind jeweils horizontal verlaufende Stütztraversen 61 bzw. 62 angeordnet, auf denen jeweils eine Palette 48 abzustützen ist, wie dieses in der obersten Aufnahmestellung oben in Fig. 1 erkennbar ist. Bewegen sich die intermittierend angetriebenen Ketten 57, 58 um die Dicke einer Sacklage nach unten, nachdem die Palette 48 eine Lage aufgenommen hat (und der Absetztisch 31, 31' wieder geschlossen worden ist), so bewegen sich die die Palette 48 abstüzenden Stütztraversen 61, 62 entsprechend schrittweise nach unten, wobei die Palette 48 mithin jeweils in horizontaler Lage verbleibt. Ist die Palette 48 schließlich voll beladen und hat die untere Position erreicht, so kann sie mit dem auf ihr befindlichen Stapel gemäß der strichpunktierten Linie nach links beispielsweise mittels Rollen auf eine Rollenbahn verfahren werden und den Palettierer verlassen, wie dieses in Fig. 2 mit dem Pfeil 66 angedeutet ist, oder aber gemäß dem Pfeil 67 in ein Zwischenlager verbracht werden.

Die Arbeitsweise des vorstehend beschriebenen Palettierers ist mithin im wesentlichen wie folgt :

Die Säcke werden dem Palettierer jeweils in Längsrichtung in dichter Folge (s. Fig. 8) mit einer Geschwindigkeit von 0,83 m/s zugeführt und von dem Zuförderer 3 auf die Rollenbahn 11 der Aufteileinrichtung 6 übergeben, wobei hier beispielhaft einmal angenommen werden soll, daß der in der Tabelle gemäß Fig. 9 mit Nr. IV bezeichnete 5er-Verband gebildet werden soll, wobei stets Lagen mit einem Packmuster A und B abwechseln.

Dabei läuft zunächst ein mit a bezeichneter Sack ohne Beeinflussung durch die Querfördervorrichtung 14 auf der Förderspur 12 durch, wird jedoch von dem in Arbeitsposition gebrachten Anschlag 24 um 90° gedreht (wie dieses in Fig. 8 gerade bei einem Sack e gezeigt wird) und wird von der Drehvorrichtung 7 an den ersten Lagenbildungsförderer 27 übergeben. Da der zweite Lagenbildungsförderer 28 frei ist, kann die Stückgutsperre 29 außer Betrieb sein, so daß der Sack a auf den zweiten Lagenbildungsförderer 28 durchlaufen kann.

Der sich auf dem Zuförderer 3 hieran anschließende Sack b wird nach. Erreichen der Aufteileinrichtung 6 von dem in Wartestellung befindlichen Mitnehmer 16' der Querfördervorrichtung 14 beaufschlagt und unter dem Winkel α von der ersten Förderspur 12 seitlich auf eine zweite Förderspur bewegt, wobei er gleichzeitig mit derjenigen Geschwindigkeit auf der Längsfördervorrichtung 11 in Förderrichtung 4 vorwärtsbewegt wird, wie dieses bezüglich des vorhergehenden Sackes a der Fall war. Kommt der Sack b mit dem Mitnehmer 16' außer Eingriff (wobei sich der zuvor in Ruheposition befindliche Mitnehmer 16" in Wartestellung bewegt hat), so wird der Sack b nur noch in Förderrichtung 4 auf der zweiten Spur in Förderrichtung vorwärtsbewegt, und zwar an dem in Ruhestellung gebrachten Anschlag 24' vorbei, so daß er nicht gedreht wird und — sofern die Stückgutsperre 29 außer Betrieb ist — bis in seine Endposition auf dem zweiten Lagenbildungsförderer 28 bewegt wird.

Der von dem Zuförderer 3 als nächstes dem Palettierer zugeförderte Sack c wird wiederum ebenso wie der Sack a behandelt, und der sich an den Sack c anschließende Sack d anschließen wie der Sack b. Schließlich wird der von dem Zuförderer 3 im Anschluß an den Sack d herangeförderte Sack e wiederum genauso behandelt wie zuvor die Säcke a und c, so daß auf dem zweiten Lagenbildungsförderer 28 eine aus zwei parallelen Reihen bestehende vorläufige Sacklage bestehend aus den Säcken a bis e entsteht, wobei der zwischen den beiden Sackreihen vorhandene Abstand s bzw. eine entsprechende Dimensionierung der Querfördervorrichtung 14 deswegen vorgesehen ist, weil dafür Sorge getragen werden muß, daß es bei einem Drehen eines Sackes an einem der Anschläge 24 oder 24' nicht zu einer Kollision mit einem dem betreffenden Sack ggf. überholenden nachfolgenden Sack.

Während die Lagenbildung mittels der Aufteileinrichtung 6 der Drehvorrichtung 7 und dem Lagenbildungsförderer 27 der Lagenbildungsvorrichtung 8 unter Betriebnahme der Stückgutsperre 29 fortschreitet, werden die auf dem Lagenbildungsförderer 28 befindlichen Säcke mittels der Abschiebeeinrichtung 32, also mittels eines ihrer Mitnehmer 33, 33' oder 33" quer zur Förderrichtung 4 von dem Lagenbildungsförderer 28 auf den Absetztisch 31, 31' abgeschoben und dort mittels der Abschiebeeinrichtung 32 sowie der Bauteile 43, 44 und 46 kalibriert, wie dieses oben links in Fig. 10 dargestellt ist. Anschließend werden sodann die beiden Tischhälften 31, 31' des Absetztisches gemäß den Pfeilen 47 nach außen bewegt und die aus den Säcken a bis e bestehende Sacklage wird entweder auf einer Palette 48 oder aber auf einer Rollenbahn abgesetzt, woraufhin der Hubförderer 56 um die Dicke einer Sacklage nach unten bewegt wird, um die nächste Sacklage aufnehmen zu können.

Diese aus den vom Zuförderer herangeführten Säcken f bis k bestehende Sacklage ist spiegelsymmetrisch zu der aus den Säcken a bis e bestehenden Sacklage und wird in entsprechender Weise gebildet. Der erste von Zuförderer 3 zugeförderte Sack f dieser Sacklage wird mithin bei Erreichen der Aufteileinrichtung 6 bereits von der Querfördervorrichtung 14 von der ersten Förderspur 12 auf die zweite Förderspur gefördert und in der Drehvorrichtung 7 mittels des Anschlages 24' um 90° gedreht. Der sich hieran anschließende Sack g läuft dagegen ohne Querverschiebung und ohne Drehung auf der ersten Förderspur 12 durch u. s. f., bis die zweite Sacklage komplettiert ist, die in Fig. 10 auf dem zweiten Lagenbildungsförderer 28 eingezeichnet ist. Nach dieser zweiten Lage mit dem Packmuster B folgt sodann wieder eine Lage mit dem Packmuster A, wie sie der aus den Säcken a bis e bestehenden ersten Lage entspricht u. s. f.

Wie aus Fig. 8 erkennbar ist, kann auf dem Lagenbildungsförderer 27 bereits wieder eine Lage gebildet bzw. vorbereitet werden, wenn sich auf dem zweiten Lagenbildungsförderer 28 noch eine Lage befindet, oder wenn diese gerade mittels der Abschiebeeinrichtung 32 von diesem heruntergeschoben wird, so daß auch hier keinerlei Totzeiten entstehen. Dabei sorgt die Stückgutsperre 29 dafür, daß bei Komplettierung einer Stückgutlage auf dem zweiten Lagenbildungsförderer 28 bzw. genauer gesagt einer Stückgutreihe zunächst keine weiteren Säcke dort zugeführt, sondern auf dem ersten Lagenbildungsförderer 27 gehalten werden. Da es sein kann, daß der auf dem zweiten Lagenbildungsförderer 28 zu bildenden Lage in einer Reihe noch ein Sack zugeführt werden muß, während die andere Reihe bereits komplettiert ist, und in dieser Reihe auf dem ersten Lagenbildungsförderer 27 bereits wieder ein Sack herangefördert wird, ist die Stückgutsperre 29, wie bereits erwähnt, in zwei unterschiedlich betätigbare, voneinander unabhängige Einheiten 29', 29" unterteilt, so daß die eine Reihe bereits blockiert werden kann, während der anderen Reihe noch ein Sack zugeführt wird.

Sobald der zweite Lagenbildungsförderer 28 frei ist, kann die Stückgutsperre 29 gelöst werden, so daß entweder der bereits auf dem ersten Lagenbildungsförderer 27 gebildete Verband oder der dort befindliche Teilverband auf den zweiten Lagenbildungsförderer 28 durchlaufen kann u. s. f.

Nachdem ein vollständiger Stückgutstapel im Hubförderer 56 fertiggestellt ist, wird dieser entweder mit einer Palette 48 oder aber palettenlos in der bereits weiter oben ausführlich beschriebenen Weise ausgeschleust.

Aus der Tabelle gemäß Fig. 9 sowie dem Diagramm gemäß Fig. 10 ist erkennbar, daß die mit dem erfindungsgemäßen Palettierer erzielbare Leistung bei vorgegebener Zuführgeschwindigkeit des Zuförderers 3 selbstverständlich u. a. von dem gewählten Packmuster (Verband) und der für einen Stückgutstapel vorgegebenen Lagenzahl abhängt, da sich die nicht völlig zu vermeidende Totzeit beim Wechsel eines plattenförmigen Stützmittels im Hubförderer umso mehr auf die erzielbare Durchsatzleistung auswirkt, je kleiner die Lagenzahl ist, so daß bei dem vorstehend anhand von Fig. 8 beispielhaft erörterten 5er-Verband gemäß Verband Nr. IV bei einer Zahl von acht Lagen über einer Stapelpalette bzw. neuen Lagen ohne Palette eine Leistung von 5 000 Säcken/h zu erzielen ist, während diese bei einer Lagenzahl von vier Lagen mit Palette bzw. Lagen ohne Palette nur noch etwa 4 000 Säcke/h beträgt. Da man indes schon aus Wirtschaftlichkeitsgründen bestrebt ist, höhere Lagenzahlen zu verwirklichen, sind mithin bei dem erfindungsgemäßen Palettierer bei verschiedenen gängigen Verbandmustern Leistungen von 5 000 Säcken/h zu erzielen, und bei den übrigen Packmustern immerhin noch Stundenleistungen, welche die Kapazitäten bisher bekannter Palettierer bei weitem übertreffen. Dieses liegt u. a. daran, daß bei dem erfindungsgemäßen Palettierer praktisch an keiner Stelle beachtliche verlorene Wartezeiten auftreten, da beispielsweise bei der Verteilung auf zwei oder ggf. mehr Förderspuren die Fördergeschwindigkeit in Förderrichtung, d. h. zur Absetzeinrichtung hin, in voller Höhe aufrechterhalten bleibt, bei der Einschleusung der Stützmittel in den Hubförderer der Stapelbildungseinrichtung praktisch keine Wartezeiten entstehen etc. Trotz dieser im Vergleich zum vorbekannten Stand der Technik enormen Leistungssteigerung um annähernd 100 % (!) sind die Betriebsgeschwindigkeiten in den einzelnen Stationen beherrschbar und das Stückgut wird nicht in unbotmäßiger Weise beansprucht, wobei es insbesondere bei einer Kombination der erfindungsgemäß vorgeschlagenen Maßnahmen trotz dieser und weiterer Vorteile möglich ist, nicht nur zu einer außerordentlich kompakten, sondern auch zu einer verhältnismäßig klein bauenden Maschine zu kommen, die praktisch als ganze Einheit mit einem LKW transportabel ist, wenig Raum erfordert, aufgrund ihrer Ausbildung als Maschine und nicht als Anlage eine außerordentlich schnelle Aufstellung und Betriebnahme (unter günstigen Verhältnissen innerhalb eines Tages) ermöglicht und insgesamt Investitionskosten erfordert, die außerordentlich niedriger sind als die bisher für zwei Palettierer mit etwa halber Leistung aufzuwendenden Kosten. Dabei ist eine betriebliche Umrüstung von Palettenbetrieb auf einen palettenlosen Betrieb innerhalb kürzester Zeit möglich etc.

Auch die hier im einzelnen nicht beschriebene Steuerung des Betriebsablaufes, die zweckmäßigerweise von einem gemeinsamen Steuerwerk, vorzugsweise unter Einbeziehung eines Rechners, durchgeführt wird, bereitet im Hinblick auf den Betriebsablauf keinerlei Schwierigkeiten.

Der Vollständigkeit halber sei noch darauf verwiesen, daß es beispielsweise bei einer palettenlosen Palettierung, bei welcher zwecks Schaffung von Aufnahmekanälen für die Gabeln von Hubgeräten gewünscht wird, in einem Stapel Lagen unterschiedlicher Stückgutzahl anzuordnen, wie dieses beispielsweise bei dem Verband Nr. V der Fall ist, zweckmäßig sein kann, zwischen dem Zuförderer 3 und dem Palettierer noch einen Pufferförderer als Staustrecke anzuordnen, wobei bei dieser Ausgestaltung die Staustrecke als nicht angetriebene, geneigte Rollenbahn ausgebildet ist, die mithin nach dem Schwerkraftprinzip arbeitet. Der Rollenbahn kann in Förderrichtung eine als Gurtförderer ausgebildete Abzugseinrichtung nachgeordnet sein, welche die Aufteileinrichtung 6 unmittelbar beschickt. Ein solches Zwischenschalten einer Staustrecke und einer dieser nachgeordneten Abzieheinrichtung zwischen dem Zuförderer 3 und der Aufteileinrichtung 6 kann aber auch in anderen Fällen als dem vorgenannten im Hinblick auf die erzielbare Leistung vorteilhaft sein, da auf diese Weise die beim Hubförderer 56 auftretende, weiter oben erörterte (wenngleich geringe) Totzeit auszugleichen bzw. zu kompensieren ist.

Bei einer solchen Ausgestaltung läuft der Zuförderer 3 ebenso wie bei der weiter oben beschriebenen Ausbildung kontinuierlich mit konstanter Geschwindigkeit durch, während der als Abzieheinrichtung für die Staustrecke dienende Gurtförderer von einer entsprechend programmierten Steuereinrichtung gemäß dem jeweiligen Packmuster und der vorgegebenen Lagenzahl gesteuert arbeitet. Bei einem Palettenwechsel bzw. einer Lage, deren Anzahl von Stückgutteilen gegenüber den übrigen Lagen eines Stapels vermindert ist, baut sich mithin auf der Staustrecke je nach den gegebenen Umständen Stückgut auf und wird unter entsprechender Steuerung des Abzugsbandes während der Bildung eines Stapels abgebaut, so daß der sich aus einem Palettenwechsel ergebende Stückgutstau auf der Staustrecke während der Bildung der letzten Lage eines Stapels vollständig abgebaut und die gleichsam als Speicher wirkende Staustrecke dann wieder leer ist u. s. f.

**Patentansprüche**

1. Vorrichtung zum Palettieren von mittels eines Zuförderers (3) auf einer Förderspur hintereinander zugeführten Stückgutteilen (1), insbesondere gefüllten Säcken, mit einer Dreheinrichtung (7) zum wahlweisen Drehen von Stückgutteilen (1) um eine Vertikalachse ; einer der Dreheinrichtung (7) vorgeordneten Aufteileinrichtung (6), mittels welcher die von Zuförderer (3) einzeln nacheinander zugeführten Stückgutteile (1) gemäß einem vorgegebenen Lagen-Packmuster gesteuert auf wenigstens zwei nebeneinanderliegende Förderspuren aufzuteilen sind, wobei die Aufteileinrichtung (6) zum einen eine mittig zur Dreheinrichtung (7) angeordnete, zu einer Lagenbildungseinrichtung (8) führende Längsfördereinrichtung (11) mit einer zur Förderspur des Zuförderers (3) fluchtenden ersten Förderspur und einer hierzu parallelen, seitlich versetzten zweiten Förderspur aufweist, mittels welcher die vom Zuförderer (3) zugeführten Stückgutteile (1) mit einer zu der Zufördergeschwindigkeit fluchtenden bzw. einer hierzu parallelen Fördergeschwindigkeit weiterzubewegen sind, und zum anderen eine im spitzen Winkel ($\alpha$) zur Förderrichtung (4) arbeitende Querfördereinrichtung (14) aufweist, mittels welcher jeweils einem quer zur Förderrichtung auf eine andere Förderspur zu bewegenden Stückgutteil (1) bis zum Erreichen der anderen, parallelen Förderspur eine quer zur Förderrichtung gerichtete Geschwindigkeitskomponente zu erteilen ist ; einer Lagenbildungseinrichtung (8) mit einer Förderstrecke (27, 28), an welcher eine Übergabe von dem in Förderrichtung (4) hintenliegenden Abschnitt (27) auf den in Förderrichtung (4) vornliegenden Abschnitt (28) der Förderstrecke (27, 28) gesteuert zu unterbinden ist, wobei der Lagenbildungseinrichtung (8) eine Stapelbildungseinrichtung (9) zum Übereinanderstapeln mehrerer Stückgutlagen nachgeordnet ist und am vorderen Endabschnitt (28) der Förderstrecke (27, 28) der Lagenbildungseinrichtung (8) eine Abschiebeeinrichtung (32) angeordnet ist, mittels welcher jeweils eine auf der Lagenbildungseinrichtung (8) gebildete Stückgutlage quer zur Förderrichtung (4) auf eine Absetzeinrichtung (31, 31') abzuschieben ist, mittels welcher jeweils eine fertige Stückgutlage aus der Vorrichtung abzugeben ist, dadurch gekennzeichnet, daß die im spitzen Winkel ($\alpha$) zur Förderrichtung (4) arbeitende, stationär angeordnete Querfördereinrichtung (14) wenigstens einen sich in Förderrichtung (4) erstreckenden, im selben Winkel ($\alpha$) zur Förderrichtung (4) bewegten Mitnehmer (16, 16', 16'') aufweist, der intermittierend antreibbar von einer Steuereinrichtung so gesteuert ist, daß seine in Förderrichtung (4) gerichtete Geschwindigkeitskomponente gleich der in Förderrichtung (4) weisenden Fördergeschwindigkeit der Längsfördereinrichtung (11) der Aufteileinrichtung (6) ist.

2. Vorrichtung nach Anspruch 1, dadurch gekennzeichnet, daß der Mitnehmer (16, 16', 16") als sich im wesentlichen vertikal erstreckende Platte ausgebildet ist, die an wenigstens einem in einer vertikalen Ebene um ein Umlenkmittel (19) endlos umlaufenden Zugträger (17) befestigt ist.

3. Vorrichtung nach Anspruch 2, dadurch gekennzeichnet, daß der Mitnehmer (16, 16', 16") an dem Zugträger (17) gelenkig befestigt ist.

4. Vorrichtung nach Anspruch 2 oder 3, dadurch gekennzeichnet, daß mehrere jeweils mit gleichem gegenseitigen Abstand am Zugträger (17) angeordnete Mitnehmer (16, 16', 16") vorgesehen sind.

5. Vorrichtung nach Anspruch 4, dadurch gekennzeichnet, daß drei Mitnehmer (16, 16', 16") vorhanden sind.

6. Vorrichtung nach einem oder mehreren der vorhergehenden Ansprüche, dadurch gekennzeichnet, daß die Förderstrecke (27, 28) der Lagenbildungseinrichtung (8) aus zwei einander in Förderrichtung (4) nachgeordneten Lagenbildungsfördern (27, 28) gebildet ist, zwischen denen eine gesteuert betätigbare Stückgutsperre (29) angeordnet ist.

7. Vorrichtung nach Anspruch 6, dadurch gekennzeichnet, daß die Stückgutsperre (29) aus wenigstens zwei quer zur Förderrichtung (4) nebeneinander angeordneten, wahlweise betätigbaren Einheiten (29', 29") besteht.

8. Vorrichtung nach einem oder mehreren der vorhergehenden Ansprüche, dadurch gekennzeichnet, daß die Abschiebeeinrichtung (32) Mitnehmer (33, 33', 33") aufweist, die jeweils an einem Laufwagen (34) sowie an einem Paar endlos umlaufender, angetriebener Zugmittel (37) befestigt sind, wobei die Laufrollen (41, 41') der Laufwagen (34) in zwei zueinander parallelen, jeweils in einer vertikalen Ebene angeordneten, endlosen Führungsschienen (42) geführt sind.

9. Vorrichtung nach Anspruch 8, dadurch gekennzeichnet, daß die Mitnehmer (33, 33', 33") der Abschiebeeinrichtung jeweils an einer mit dem betreffenden Zugmittel (37) verbundenen Achse (38) befestigt sind, die zur Achse einer Laufrolle (41) fluchtet, und daß die andere Laufrolle (41) von dem Zugmittel (37) frei ist.

10. Vorrichtung nach einem oder mehreren der vorhergehenden Ansprüche, dadurch gekennzeichnet, daß die Absetzeinrichtung einen mittig geteilten Absetztisch (31, 31') aufweist, dessen Tischplatten (31, 31') unter einer abzusetzenden Stückgutlage in einander entgegengesetzter Richtung beweglich sind.

11. Vorrichtung nach einem oder mehreren der vorhergehenden Ansprüche, dadurch gekennzeichnet, daß der Aufteileinrichtung (6) eine von dem Zuförderer (3) beschickte Staustrecke vorgeordnet ist, der in Förderrichtung (4) eine von einer programmierten Steuereinrichtung gemäß dem Packmuster der jeweils zu bildenden Stückgutlage gesteuerte Abzugseinrichtung nachgeordnet ist.

12. Vorrichtung nach einem oder mehreren der vorhergehenden Ansprüche, dadurch gekennzeichnet, daß die Stapelbildungseinrichtung (9) unterhalb der Absetzeinrichtung angeordnet ist, und daß an ihrem oberen Ende ein plattenförmiges Stützmittel (48) zum Abstützen der untersten Lage eines Stückgutstapels einzuschleusen ist, welches an einem intermittierend absenkbaren Hubförderer (56) zu halten ist.

13. Vorrichtung nach Anspruch 12, dadurch gekennzeichnet, daß der Hubförderer (56) zwei zueinander parallele Paare endlos umlaufender Kettenstränge (57, 58) aufweist, zwischen denen jeweils Stütztraversen (61 bzw. 62) angeordnet sind, auf denen jeweils das plattenförmige Stützmittel (48) horizontal abzustützen ist, wobei die Kettenstränge (57, 58) im Hubbereich senkrecht verlaufen und oberhalb sowie unterhalb des Hubbereiches jeweils mit Umlenkrädern (59) umgelenkt sind.

14. Vorrichtung nach Anspruch 13, dadurch gekennzeichnet, daß die abwärtslaufenden Trume der Kettenpaare (57, 58) einen gegenseitigen Abstand aufweisen, der etwa gleich der Länge des plattenförmigen Stützmittels (48) ist ; und daß die abwärtslaufenden Trume der Ketten (57, 58) im wesentlichen in einer Ebene verlaufen.

15. Vorrichtung nach Anspruch 13 oder 14, dadurch gekennzeichnet, daß mehrere mit gegenseitigem Abstand angeordnete Stütztraversen (61, 62) vorhanden sind.

16. Vorrichtung nach einem oder mehreren der Ansprüche 12 bis 15, dadurch gekennzeichnet, daß das plattenförmige Stützmittel aus einem Abschnitt einer Rollenbahn besteht, und daß wenigstens ein zweites plattenförmiges Stützmittel vorhanden ist, welches sich in Aufnahmeposition befindet, wenn das erste plattenförmige Stützmittel sich in Abgabeposition befindet und umgekehrt.

17. Vorrichtung nach Anspruch 16, dadurch gekennzeichnet, daß am unteren Ende des Hubförderers (56) ein Reibantrieb angeordnet ist, mit dem die Rollen des plattenförmigen Stützmittels in Förderrichtung antreibbar sind.

18. Vorrichtung nach Anspruch 17, dadurch gekennzeichnet, daß der Reibantrieb als Gurtförderer ausgebildet ist, dessen Obertrum in Abgabeposition des in Abgabestellung befindlichen plattenförmigen Stützmittels mit der Unterseite der Rollen zusammenwirkt.

**Claims**

1. An apparatus for palletising piece goods (1), more particularly filled bags, supplied consecutively on a conveying line by means of a feeder (3), the apparatus having : a turning device (7) for selectively turning piece goods (1) around a vertical axis : a distributor (6) which precedes the turning device (7) and which enables the piece goods (1) supplied consecutively by the feeder (3) to be distributed in controlled manner in accordance with a predetermined layering packing pattern between at least two side-by-side conveying lines, the distributor (6) having : a longitudinal conveyor (11) which is disposed centrally of the turning device (7) and which extends to a layering device (8), the latter conveyor (11) having a first conveying line aligned with the conveying line of the feeder (3) and a second conveying line parallel to and laterally offset from the first conveying line, the second conveying line enabling the piece goods (1) supplied by the feeder (3) to be advanced at a speed in alignment with the feeder speed or at a conveying speed parallel thereto ; and a transverse conveyor (14) which operates at an acute angle ($\alpha$) to the conveying direction (4) and which enables a piece-goods article (1) required to be moved to another conveying line transversely to the conveying direction to have imparted to it, until it reaches the other parallel conveying line, a speed component operative transversely of the conveying direction ; the apparatus also comprising a layering device (8) having a conveying path (27, 28) on which a transfer from the path part (27) in rear in the conveying direction (4) to the path part (28) in advance in the conveying direction (4) can be inhibited in controlled manner, a stacking device (9) for stacking a number of layers of piece goods one above another being disposed after the layering device (8), while a push-off device (32) is disposed on the front path part (28) and enables a layer of piece goods formed on the layering device (8) to be pushed off on to a dumping device (31, 31') transversely to the conveying direction (4), the dumping device (31, 31') being adapted to deliver one finished layer of piece material at a time from the apparatus, characterised in that the stationary transverse conveyor (14) has at least one entraining member (16, 16', 16") which extends in the conveying direction (4) at the same angle ($\alpha$) thereto and which is so controlled in intermittently drivable manner by a control facility that its speed component operative in the conveying direction (4) is equal to the conveying speed in the conveying direction (4) of the longitudinal conveyor (11).

2. An apparatus according to claim 1, characterised in that the entraining member (16, 16', 16") is a substantially vertically extending plate secured to at least one tensile member (17) rotating endlessly in a vertical plane around a reversing element (19).

3. An apparatus according to claim 2, characterised in that the entraining member (16, 16', 16") is pivotally secured to the tensile member (17).

4. An apparatus according to claim 2 or 3, characterised in that a number of entraining members (16, 16', 16") each disposed at the same distance from the tensile member (17) is provided.

5. An apparatus according to claim 4, characterised in that three entraining members (16, 16', 16") are present.

6. An apparatus according to one or more of the previous claims, characterised in that the conveying path (27, 28) of the layering device (8) comprises two layering conveyors (27, 28) which are disposed one after another as considered in the conveying direction (4) and between which a controlledly actuatable piece-goods barrier (29) is disposed.

7. An apparatus according to claim 6, characterised in that the barrier (29) comprises at least two selectively operable units (29', 29") disposed side-by-side transversely of the conveying direction (4).

8. An apparatus according to one or more of the previous claims, characterised in that the push-off device (32) has entraining members (33, 33', 33") each secured to a trolley (34) and to a pair of endlessly rotating driven pulling means (37), the trolley rollers (41, 41') being guided in two parallel endless guide rails (42) each disposed in a vertical plane.

9. An apparatus according to claim 8, characterised in that the entraining members (33, 33', 33") of the push-off device (32) are each secured to a pivot (38) connected to the particular pull means (37) concerned and in alignment with the axis of one roller (41), while the other roller (41) is free of the pulling means (37).

10. An apparatus according to one or more of the previous claims, characterised in that the dumping device has a centrally divided dumping or delivery table (31, 31') whose panels (31, 31') are movable in opposite directions to one another below a layer of goods to be dumped or deposited.

11. An apparatus according to one or more of the previous claims, characterised in that the distributor (6) is preceded by a back-up path which is supplied by the feeder (3) and which is followed in the conveying direction (4) by a removal device controlled by a programmed controller in accordance with the packing pattern of the particular layer of piece goods required to be formed.

12. An apparatus according to one or more of the previous claims, characterised in that the stacking device (9) is disposed below the dumping device and a plate-like support element (48) can be introduced at its top end to support the bottom layer of a stack of piece goods, the support element (48) being adapted to be retained on an intermittently lowerable elevator (56).

13. An apparatus according to claim 12, characterised in that the elevator (56) has two parallel pairs of endlessly rotating chains (57, 58) between which bearing cross-members (61, 62 respectively) are disposed, the plate-like support element (48) being adapted to be borne horizontally on such cross-members, the chains (57, 58) extending vertically in the lifting zone and reversing at the top and bottom thereof over reversing sprockets (59).

14. An apparatus according to claim 13, characterised in that the descending runs of the chain pairs (57, 58) are separated from one another by a distance substantially equal to the length of the support element (48) and extend substantially in one plane.

15. An apparatus according to claim 13 or 14, characterised in that a number of spaced-apart support cross-members (61, 62) are provided.

16. An apparatus according to one or more of claims 12-15, characterised in that the plate-like support member is a part of a roller conveyor and at least one second plate-like support element is provided which is disposed in the receiving position when the first plate-like support element is in the delivery position and vice-versa.

17. An apparatus according to claim 16, characterised in that a friction drive for driving the rollers of the plate-like support element in the conveying direction is disposed at the bottom end of the elevator (56).

18. An apparatus according to claim 17, characterised in that the friction drive is a belt conveyor whose top run co-operates with the underside of the rollers in the delivery position of the plate-like support element in the delivery position.

## Revendications

1. Appareil pour palettiser des paquets de marchandises, en particulier des sacs pleins, amenés les uns à la suite des autres, par un transporteur d'amenée (3), sur une voie de transport, comportant un moyen de pivotement (7) pour faire pivoter à volonté des paquets de marchandises autour d'un axe vertical ; un moyen répartiteur (6) disposé en amont du moyen de pivotement (7) et grâce auquel les paquets de marchandises (1) amenés séparément l'un après l'autre par le transporteur (3) sont répartis sur au moins deux voies de transport situées côte à côte, commandés selon un modèle d'emballage en couches prédéterminé, moyen répartiteur (6) comportant, d'une part, un moyen de transport longitudinal (11) menant à un moyen de mise en couches (8) disposé dans l'axe du moyen de pivotement (7), avec une première voie de transport alignée sur la voie du transporteur d'amenée (3) et une seconde voie de transport parallèle, mais décalée latéralement par rapport audit transport d'amenée, moyen de transport longitudinal (11) grâce auquel les paquets de marchandises (1) amenés par le transporteur d'amenée (3) sont entraînés à une vitesse alignée sur la vitesse d'amenée ou à une vitesse parallèle à celle-ci, et, d'autre part, un moyen de transport transversal opérant à angle aigu (α) par rapport au moyen transporteur (4) et grâce auquel est imposée à un paquet (1) devant être entraîné sur une autre voie de transport, transversalement à la direction d'amenée, jusqu'à ce qu'il atteigne l'autre voie de transport parallèle, une composante de vitesse dirigée transversalement à la direction d'amenée ; un moyen de mise en couches (8) présentant une zone de transport (27, 28) sur laquelle est interrompu à la commande le passage de la section amont (27) de ladite zone sur la section aval (28) de cette zone (27, 28), un moyen d'empilage (9) étant placé après le moyen de mise en couches (8) pour empiler plusieurs couches l'une sur l'autre, et un moyen d'expulsion (32) étant disposé à la section d'extrémité aval (28) de la zone de transport (27, 28) du moyen de mise en couches (8), pour faire passer transversalement à la direction d'amenée (4) chacune des couches de paquets, formées sur le moyen de mise en couches (8), sur un moyen de mise en dépôt (31, 31') qui délivre de l'appareil, successivement, des couches de paquets terminées, caractérisé par le fait que le moyen de transport transversal (14), monté fixe, et opérant à angle aigu (α) de la direction d'amenée (4), possède au moins un toc entraîneur (16, 16', 16") entraîné suivant le même angle (α) par rapport à la direction d'amenée (4) et s'étendant en cette direction d'amenée (4), et qui est commandé, par un moyen de commande, en étant déplaçable de façon intermittente, de telle sorte que sa composante de vitesse dirigée en direction d'amenée (4) est égale à la vitesse de transport, dirigée en direction d'amenée (4), du moyen de transport longitudinal (11) du moyen répartiteur (6).

2. Appareil selon la revendication 1, caractérisé par le fait que l'entraîneur (16, 16', 16") est en forme de plaque, s'étendant à peu près verticalement, fixée sur au moins un support tracteur (17) circulant sans fin autour d'un organe de renvoi (19), dans un plan vertical.

3. Appareil selon la revendication 2, caractérisé par le fait que l'entraîneur (16, 16', 16") est fixé articulé sur le support tracteur (17).

4. Appareil selon la revendication 2 ou 3, caractérisé par le fait qu'il est prévu plusieurs entraîneurs (16, 16', 16") montés chacun sur un support tracteur (17) à intervalles égaux entre eux.

5. Appareil selon la revendication 4, caractérisé par le fait qu'il est prévu trois entraîneurs (16, 16', 16").

6. Appareil selon l'une ou plusieurs des revendications précédentes, caractérisé par le fait que la zone de transport (27, 28) du moyen de mise en couches (8) est formée de deux transporteurs de mise en couches (27, 28) disposés l'un derrière l'autre dans la direction d'amenée (4) et entre lesquels est disposé un moyen de blocage de paquets (29) actionnable par commande.

7. Appareil selon la revendication 6, caractérisé par le fait que le moyen de blocage des paquets (29) est constitué par au moins deux unités (29', 29") actionnables à volonté et disposées côte à côte, transversalement par rapport à la direction d'amenée (4).

8. Appareil selon l'une ou plusieurs des revendications précédentes, caractérisé par le fait que le moyen d'expulsion (32) comporte des entraîneurs (33, 33', 33") qui sont fixés chacun sur un chariot (34) ainsi que sur une paire de moyen tracteur (37) entraîné dans un mouvement sans fin, les galets de roulement (41, 41') des chariots (34) étant guidés dans deux rails de guidage (42) sans fin, parallèles, situés respectivement dans un plan vertical.

9. Appareil selon la revendication 8, caractérisé par le fait que les entraîneurs (33, 33', 33") du moyen d'expulsion (32) sont fixés respectivement sur un axe (38) lié au moyen tracteur (37) correspondant et qui est de niveau avec l'axe d'un des galets de roulement (41) et l'autre galet (41) est libre par rapport au moyen tracteur (37).

10. Appareil selon l'une ou plusieurs des revendications précédentes, caractérisé par le fait que le moyen de mise en dépôt comporte une table de dépôt (31, 31') subdivisée axialement, dont les plateaux (31, 31') sont mobiles en directions opposées, sous une couche de paquets à déposer.

11. Appareil selon l'une ou plusieurs des revendications précédentes, caractérisé par le fait que le moyen répartiteur (6) est disposé en amont d'une zone d'accumulation alimentée par le transporteur d'amenée (3) et en aval de laquelle est disposé un moyen d'évacuation commandé par un moyen de commande programmé selon un modèle de groupement des couches de paquets à former.

12. Appareil selon l'une ou plusieurs des revendications précédentes, caractérisé par le fait que le moyen d'empilage (9) est situé en dessous du moyen de mise en dépôt et, à son extrémité supérieure, est raccordable un moyen support (48) en forme de plaque pour supporter la couche inférieure d'une pile de paquets qui est retenue sur un transporteur de levage (56) que l'on peut faire descendre de façon intermittente.

13. Appareil selon la revendication 12, caractérisé par le fait que le transporteur de levage (56) comporte deux paires de câbles à chaîne (57, 58) parallèles circulant sans fin, entre lesquelles sont disposées des traverses supports (61 ou 62) sur lesquelles prend appui horizontalement le moyen support (48), les chaînes (57, 58) se déplaçant verticalement dans la zone de levée et changeant de direction en haut et en bas de la zone de levée, grâce à des roues de renvoi (59).

14. Appareil selon la revendication 13, caractérisé par le fait que les brins descendants de la paire de chaînes (57, 58) sont à une distance à peu près égale à la longueur du moyen d'appui (48) en forme de plaque et ces brins descendants des chaînes (57, 58) circulent sensiblement dans un plan.

15. Appareil selon la revendication 13 ou 14, caractérisé par le fait que sont prévues plusieurs traverses d'appui (61, 62) disposées à distance l'une de l'autre.

16. Appareil selon l'une ou plusieurs des revendications 12 à 15, caractérisé par le fait que le moyen d'appui en forme de plaque est constitué par une section de voie de roulement et il est prévu au moins un deuxième moyen d'appui en forme de plaque qui se trouve en position de réception quand le premier moyen d'appui en forme de plaque se trouve en position d'évacuation et inversement.

17. Appareil selon la revendication 16, caractérisé par le fait qu'à l'extrémité inférieure du transporteur de levage (56) est disposé un mécanisme à frottement avec lequel sont entraînés, en direction d'amenée, les rouleaux du moyen d'appui en forme de plaque.

18. Appareil selon la revendication 17, caractérisé par le fait que le mécanisme à frottement est en forme de bande transporteuse dont le brin supérieur, en position de délivrance du moyen d'appui en forme de plaque se trouvant en position de délivrance, coopère avec la face inférieure des rouleaux.

FIG. 1

FIG. 2

FIG.3

FIG.4

FIG.5

FIG.7

FIG.6

FIG.8

| VERBAND NR | I | II | III | IV | V | VI | VII | VIII | IX |
|---|---|---|---|---|---|---|---|---|---|
| VERBAND | 3er | 4er | KAMIN | 5er | 7 × 5er + 1 × KAMIN | 8 × 5er + 1 × KAMIN | 6er | 10er | 10er 1 × 6er |
| LEISTUNG S/h | 3000 | 4000 | 4000 | 5000 | 3600 | 4000 | 3600 | 5000 | 5000 |
| PACKMUSTER A | | | | | | | | | |
| PACKMUSTER B | | | | | | | | | |
| SACK-GROSSE | 800 × 400 | 600 × 400 | 600 × 400 | 600 × 400 | 600 × 400 | 600 × 400 | 600 × 300 | 400 × 300 | 400 × 300 |

FIG.9

FIG.10